# EUROPEAN PATENT SPECIFICATION

(11) **EP 2 358 834 B1**
(45) Date of publication and mention of the grant of the patent: **05.06.2013**
(21) Application number: 09796046.2
(22) Date of filing: 18.12.2009
(51) Int. Cl.: C09J 7/00, C09J 11/08, F16J 15/10, F16J 15/14

(54) **SEALANT TAPE COMPRISING OFFSETTING PARTICLES**
DICHTMITTELBAND MIT ABSTANDSHALTENDEN PARTIKELN
BANDE D'ÉTANCHÉITÉ À PARTICULES DE DÉCALAGE

(30) Priority: 18.12.2008 GB 0823063; 22.07.2009 GB 0912749
(43) Date of publication of application: 24.08.2011
(73) Proprietor: Bostik SA, 92400 Courbevoie (FR)
(72) Inventor: LAVERY, Michael, Staffordshire ST17 0HJ (GB); BERRY, Keith, Staffordshire ST16 3BY (GB)
(74) Representative: Houghton, Mark Phillip
(86) International application number: PCT/GB2009/051742
(87) International publication number: WO 2010/070355

(56) References cited:
- WO-A1-2008/084843
- US-A- 4 759 962
- US-A1- 2007 298 672
- US-B1- 6 447 898

## Description

The present invention relates to sealant tape or extruded strip, suitable for sealing lap joints, the tape or strip comprising offsetting particles, in particular, mastic tape comprising offsetting particles suitable for use with sheet materials is considered. Particularly suitable are sheet materials which are brittle or have surfaces susceptible to abrasion. Also suitable is a non-setting mastic, where the sealant remains in a plastic state over time.

When sealing joints, such as between sheets of material it is known to use a sealant tape comprising a curable sealant composition which adheres to the material and serves to form a resilient and water tight joint. Sheets of material are commonly joined by use of a lap-joint, this is a joint were adjacent edges of materials to be joined are overlapped. Such joints are widely used in automotive construction, particularly where sheets of metal are to be joined. A thin layer of sealant is placed between metal sheets and then one sheet is partially lapped over another, or is folded over under compression, to form a sealed joint. In these circumstances it is a known problem that sealant introduced between the sheets in the region of overlap which constitutes the lap-joint can extrude from the joint before curing and hence the sealant cannot effectively perform its function. A known solution to this problem is the provision of offsetting elements, such as shims, which are included in the sealant and have a width equal to the desired joint thickness. Using this solution, when a joint is formed under compression the mastic is not further extruded once the material sheets being joined abut the shims, which serve to define the offset of the material of one part of the joint from the material of another part.

GB 1541482 discloses the use of compression resistant elements in the form of wires of 1mm diameter and below in their shortest axis as offsetting elements. The compression resistant elements are laid along their long axis on a strip of sealant tape. Mention is made of hard spheres in the form of steel shot and glass beads for use as the compression resistant elements.

US 4759962 discloses the use of substantially incompressible spacer materials which serve as offsetting particles and are in the thickness range of 0.6 to 0.1 mm. It is made an essential requirement that the substantially incompressible spacer materials are not substantially compressed when employed in sealing joints. Mention is made of the use of spherical particles and particles described as 'ovoids or ellipsoids'.

EP 0344403 A1 discloses the use of glass offsetting particles. EP 2104171 discloses the use of glass offsetting particles at high temperatures. Such a use is unsuitable for most applications as the temperatures disclosed would damage typical sheet materials to be joined, such as plastics or aluminium and paints coatings on steel or would cause them to be damaged, such as by the formation of a joint.

In automotive production applications, particularly the mass-produced production of cars, the use of incompressible spacer materials has been found to be suitable. It is possible to compress joints at a pressure such that the materials being joined, such as metal sheets, engage with the high points of the incompressible spacer material so as to locally deform and therefore lock the joint. Furthermore, in such applications as automotive manufacture using metal sheet the size of the incompressible spacer materials are in the order of 0.5 mm and the lap joints are in the order of 20 times this size in width. Therefore the particles, even if not locked by local deformation, have an effectively large distance to travel to be self extruded from a joint. Hence, the use of incompressible spacer particles in setting sealant applications is a known and effective solution in many circumstances.

However, a range of other applications of sealants, such as in the form of an extruded sealant tape, to seal joints, for example in the construction of buildings, mobile-homes and caravans are known and in which it has not been possible to successfully incorporate offsetting particles. The characteristics of these applications are that effectively large gaps have to be filled. Gaps greater than 1 mm in joints are normally present and lap joints are normally secured by means of individual fasteners, such as, screws, rivets and bolts.

To date the best solution for sealing lap joints with a gap of I mm or greater was to manually insert shims into the joint whilst it is being formed. Further when shims are oriented in the principal axis (i.e. along the length of a strip or tape) of the sealant strip any sideways movement serves to push out a large volume of sealant, such as when a fastener impinges upon the wire or metal shim. When shims, are in the alternative, orientated perpendicular to the principal axis of the sealant strip (i.e. pushed in sideways) this serves to break continuity of the sealant across the joint and with subsequent movement of the joint in normal use leaks appear. In particular, in applications where manual construction is predominantly used, such as in coach-building, the construction of buildings, busses, mobile-homes and caravans it is preferred that a single row of fasteners is applied to a joint, usually centrally so as to minimise labour. A single elongate spacer with in-line fasteners can distort a joint and extrudes the spacers. Hence, in the situation where a relatively large gap is present in a joint, such as is typical in manual construction of joints, between sheets of metal or plastics a satisfactory solution to joint reliability has not been found.

Further, in the manual construction of joints it is usual to employ a stock of flat steel, plastics and aluminium sheet of a low rigidity so that the material may be readily reformed manually into a desired shape. Such low rigidity materials tend to deform so as to exacerbate extrusion since offsetting elements act as a fulcrum close to the point of application of force and as such act as a first class lever to lever open the joint. This is particularly troublesome as the width of joints, i.e. the width of material overlap in the lap joint, in these applications is usually in the order of less than 10 or 20 times the thickness of the joint.

In summary, a class of lap joint exists, predominantly those suitable for manual construction, where the use of an offset compressible spacer particle may be beneficial but in which to date no suitable composition has been provided, unlike in the automotive industry which uses relatively rigid assemblies, fine tolerances and mechanised construction.

A further class of applications has also found difficulty. This is where brittle sheets of material, such as glass or Perspex® are to be sealed. For example, the direct bonding of windscreens and double glazing units. Here, the use of offsetting particles increases the incidence of sheet breakage, particularly after installation.

It is an object of the present invention to provide a sealant tape or mastic intended to be applied as a gap sealant with an improved form of offsetting particles suitable for filling deep joints (i.e. joints of greater than I or 2mm sealant thickness), particularly between flexible materials and brittle materials and most particularly when used to form a lap joint with a non-setting sealant or a setting sealant when movement of the joint is likely during the normal setting time.

It is a further object of the present invention to provide a sealant tape or mastic intended to be applied as a gap sealant with an improved form of offsetting particles for use where discrete fastening elements are used to secure a joint. Examples of improvements required are reduced extrusion of sealant from a joint and reduced extrusion of particles from a joint, particularly joints under compression and particularly of joints using a non-setting sealant.

It is a further object of the present invention to provide a sealant tape or mastic, comprising offsetting particles, which is adapted for manual application. Pre-formed strips (such as in tape form) of sealant, particularly a non-setting sealant, are particularly suitable for manual application as the dimensions of the strip are predetermined. Further, lap joints which are formed manually are readily secured by a plurality of discrete fixing points, such as self-tapping screws or rivets.

It is a further object of the present invention to incorporate spacer beads during the mixing and / or extrusion process where high shear is encountered. This potentially providing a shorter production process, avoiding a step of placing offsetting particles into the sealant as a separate step, which is a significant disadvantage with the present practice of using shims.

The present invention in its various aspects is as set out in the appended claims.

The present invention provides a sealing strip comprising a continuous sealant composition in which are located deformable offsetting particles for, in use, defining a minimum thickness of the sealing strip when placed between two surfaces to be sealed. Sealing being a process wherein two sheets of material are contacted in such a way that a fluid, usually water, will not readily penetrate between the sheets. By a continuous sealant composition, it is meant a composition in which the sealant forms a continuous phase with the offsetting particles acting as island discontinuities.

A deformable offsetting particle of the present invention are particles that do not fracture on deformation" i.e. they are not brittle such as deformation of up to 50% in diameter, preferably 75% in diameter does not cause cracking. Glass particles are therefore excluded by this definition. Particles which fracture serve to provide sharp edges to damage materials being joined and form capillary channels through which water ingress may occur.

The Young's modulus of deformable offsetting particles used in the present invention is preferably between 0.1 GPa and 15 GPa, more preferably between 0.2 GPa and 10 GPa, most preferably between 0.2 and 7 GPa, even more preferably 0.3 to 0.8 GPa. An offsetting particle having the Young's modulus characteristics as defined above is herein defined as a deformable offsetting particle. By using a deformable offsetting particle it has been found that the incidence of breakage of brittle sheet material against which a sealant of the invention is pressed is reduced. Also by using a deformable offsetting particle it has been found that the incidence of the abrasion of coated sheet material against which a sealant of the invention is pressed is reduced, thus reducing the potential for corrosion. Further, the extent of extrusion of sealant from a joint, particularly non-setting has been found to be reduced as compared to when non-deformable particles are used, when comparing compositions of the same continuous phase.

In a method of using a sealant of the present invention the sealant has a first Young's modulus, the offsetting particles have a second Young's modulus, the panels of flexible material have a third Young's modulus, and optionally one of the panels of flexible material has a fourth Young's modulus, wherein at least one of the third and fourth Young's modulus is greater than the second Young's modulus and all the moduli are greater than the first Young's modulus. By providing such a hierarchy of material properties it has been found that the reduced sheet breakage, reduced abrasion and reduced or eliminated sealant extrusion are obtainable.

The deformable offsetting particles for use in the present invention are resilient deformable particles, deformable particles which are not resilient, such as lead shot are not suitable for use in the present invention as such particles are unable to relieve any internal stress on a joint and as such enable potential joint movement and self extrusion of mastic. Further, metal containing offsetting particles are not preferred and are preferably absent as metals have a significantly different surface energy that the sealant compositions in which they reside and so are not efficiently wetted by the sealant in an uncured state or when not compressed in a joint, causing particle separation on mixing. Further metal particles, unless of identical (unlikely) composition to sheet being joined set up galvanic corrosion pathways giving rise to joint deterioration.

Whilst it is appreciated that nearly all materials have some degree of resilient deformation for the purposes of the present invention resilient deformation is recoverable deformation that is in the order of a change in dimension of 1%, preferably 5%, more preferably 10% or more. This feature of resilience is thought to be a factor in reducing the extent of non-setting sealant extrusion from joints. However, materials, such as rubber with potentially very high recoverable deformation (e.g. above 100%) are not necessarily beneficial as they can store a large amount of energy under compression and self extrude from a joint rather than remain deformed, if joint construction so allows.

In the present invention, it is preferred that the sealant strip, when used by in-situ extrusion or as pre-formed, is of a thickness greater than 1 mm, optionally greater than 2 mm when first placed in the joint, the sealant strip comprising a plurality of offsetting particles, there being at least one particle for every centimetre of length of the strip, the particles having a smallest dimension of between 1 mm and 3 mm and not greater than the thickness of the sealant strip. The thickness of the sealant strip is preferably less than 10 mm, preferably less than 5 mm most preferably less than 3 mm. It has been found that the benefits of the present invention are more evident with thicker sealant strips (such as between 2 and 5 mm in thickness), particularly because when very thin strips (less than 2 mm, particularly less than 1 mm, most particularly less than 0.5 mm) are used with correspondingly small particles the inherent roughness of most services of sheet materials can be enough to retain particles from extrusion and also capillary affects come into play also retaining sealant in a joint. Furthermore, very thin sealant strips (i.e. outside the above dimensions) are not amenable to manual handling for the construction of a lap joint.

The offsetting particles of the present invention, being deformable, may be, preferably in the form of a broader particle size distribution than is possible when non-deformable particles are used. By, for example, using particles conforming to a generally Gaussian distribution of particle sizes having a standard deviation of 5%, preferably 10%, more preferably 15% of the average particle size (diameter, for non spherical the largest dimension) may be used. A standard deviation greater than 20 or 30% is not preferred. In manual construction this may permit a first indication that a required joint thickness has been reached before further tightening engage is substantially all the deformable particles to complete joint construction to a given thickness.

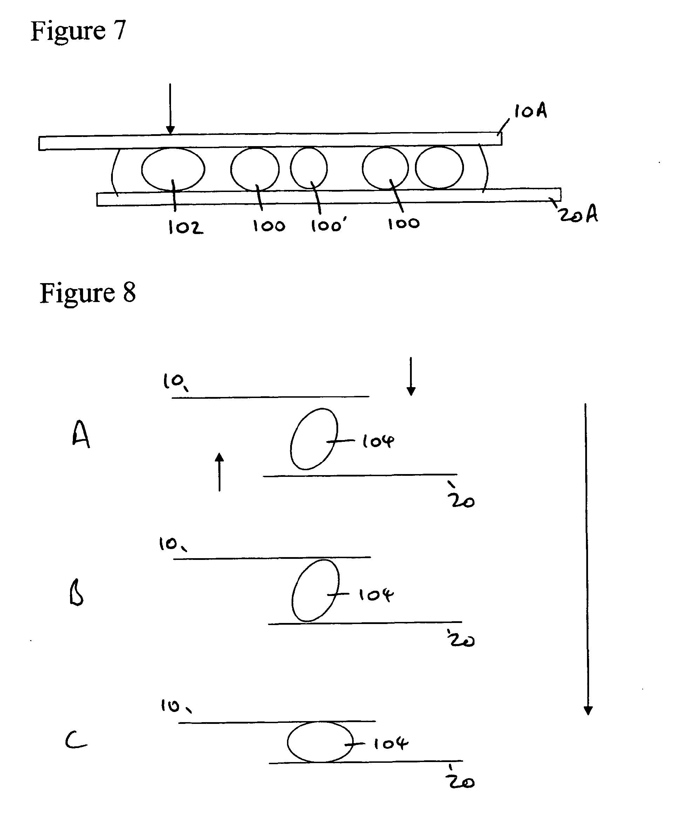

In the present invention it is preferred that the sealant strip comprises a deformable offsetting particle concentration of >100 beads per 100 x 100 mm (i.e. 10,000 mm²) of sealant strip, more preferably from 100 to 500 beads per 100 x 100 mm, most preferably from 150 to 250 beads per 100 x 100 mm. The deformable offsetting particles are preferably in the form of beads, the beads are preferably in the form of spheroids, the beads are preferably in the form of spheres or ellipsoids, the beads are most preferably in the form of ellipsoidal particles, for the reasons illustrated below in figures 8. This provides a uniform gap of the required thickness between the two substrates. A bead concentration preferably does not exceed 5000 beads per 100 x 100 mm of sealant strip, preferably not above 1000 beads, as this has been found to reduce the sealing efficiency of a joint. These criteria is particularly relevant when the beads are of diameter of I mm, preferably 1.5, most preferably 2 mm in diameter or greater, a practical upper limit of particle size being particles of 5mm, preferably 3mm, in diameter.

By concentration of 100 beads per 100 x 100 mm of sealant strip is meant that a sealant strip of thickness within the ranges specified by the present invention when viewed in the direction of that thickness will comprise 100 beads within each 100 x100 mm of surface area. For example, in a tape of 3mm depth then the given number of particles will occupy that depth.

The present invention also includes a method of forming a water tight joint, preferably a lap joint, between two surfaces, preferably surfaces of sheet materials, the method comprising placing a sealant strip of the first aspect of the present invention on a first surface and placing the second surface on the exposed face of the sealant strip and bringing the surfaces together until contact is made with the deformable spacer beads and they start to function as spacers between the two surfaces as evidenced by an increase in force required to compress the joint further.

A further method of the present invention, for sealing sheets of material in a region of overlap, the method optionally being a method of manually constructing a sealed lap joint, is a method comprising the steps:
a) placing a sealant strip between overlapping panels of flexible material;
b) securing the sheet material in the region of overlap where the sealant strip is present by means of a plurality of fasteners, each fastener being placed at a different position along the length of the lap joint, wherein each fastener is applied to achieve a predetermined compressive force between the overlapping panels. An example of this would be the securing of two overlapping sheets of plastics material, a sealant strip of the present invention being placed in the region of overlap of the sheets and self tapping screws inserted in the region of overlap through the first sheet, the sealant strip and into the second sheet, the insertion occurring until a given torque applied to the screw is achieved, thus defining a compressive force between the sheets.

This feature of the present invention relates to joining sheets of material, however, whilst thin sheets of preferably flexible in the order of 0.2 to 5mm, preferably 0.3 to 3mm, most preferably 0.3 to 1.5mm thick are preferred the invention may also extend to where a sheet is joined to a more rigid feature, such as a moulded window surround, chassis component, door frame or glass panel. However, such components are generally in the form of thin sections (c.f. rectangular tube, L-section beading) and are considered to fall within the scope of the definition of sheet in the broadest understanding of the present invention.

In the present invention there is provided a process for providing a sealant, such as in the form of a non-setting extruded sealant tape, comprising offsetting particles; the process comprising the steps of
i) mixing rubber (either natural or synthetic), in the form of blocks, granules or high (>11 centistokes at 100°C) viscosity liquids together with adjuvants, such as process oils and fillers antioxidants to form a non-setting (i.e. non-curing) mastic;
ii) adding deformable offsetting particles to the mastic;
iii) mixing the particles with the mastic in the same apparatus used for the mixing process; and
iv) extruding the sealant comprising offsetting particles in an extruder to provide units of sealant including offsetting particles for use as a sealant.

The process according to this aspect of the present invention is advantageous in that a single machine may be used for both mixing blocks of rubber to form a mastic whilst incorporating offsetting particles which are not damaged by the process. The deformable offsetting particles are preferably mixed in towards the end of the mixing process, i.e. after all other components have been homogenously incorporated to minimise damage to the beads. The mixing process may also provide comminution of the rubber, such as, for example, to break down large blocks of rubber into small enough particles that a continuous paste is formed with the adjuvants.

A preferred rubber to provide sealant compositions of the present invention is selected from natural rubber, butyl rubber, ethylene propylene diene rubbers (e.g. EPDM), and polyisobutylene rubbers. These rubbers provide a combination of low extrusion in combination with relatively good adhesion to metal surfaces.

The mastic may be provided by mixing blocks of rubber by placing them under shear for a sufficient time to provide a pliable plastic material mastic base composition to which offsetting particles may be introduced to form the materials previously described.

Unlike non-deformable offsetting particles which damage high shear mixers and extruders due to their abrasive nature, which is due to the non-compressibility of these particles and the implicit hardness of those particles, the deformable particles of the present invention do not. This is particularly true when the particles are greater than about 1 mm in diameter; then it is advantageous to use deformable particles in the size range 1 to 3 mm which can be used in planetary mixers, Z-blade (same as sigma blade) mixers and processed through single or twin screw extruders whilst not damaging the particles and mixing them sufficiently to provide a sealant containing uniformly dispersed particles. Furthermore the use of deformable particles eliminates wear on the manufacturing equipment such as planetary mixers, Z-blade (sigma blade) mixers and single or twin screw extruders , which in the case of, for example, glass particles is unacceptably high.

The advantage of incorporating the deformable beads at the mixing / extruding stages is that the addition of spacers at this stage is more efficient and the distribution is more uniform than the labour intensive process of laying compression resistant elements on top of the sealant (such as disclosed in GB1541482) or depositing substantially incompressible spacers onto the sealant by sticking said compression resistant elements to a film either by electrostatic or chemically adhesive means (such as disclosed in US 4759962).

A manufacturing method for producing a sealant of the present invention which provides minimal machine wear is as follows:
Bulk sealant is produced on a Z-blade (or sigma blade) mixer of the type manufactured by Kupper, AMK or Winkworth, for example, and typically having a batch capacity of from 1 to 3 tonnes. The mixer is preferably fitted with a screw to aid the mixing process and facilitate emptying from the mixer.
A heated jacket (either steam heated or oil heated) is required to aid dispersion of the high molecular weight rubber (for example butyl rubber, polyisobutylene, ethylene propylene, poyolefin etc) together with inorganic mineral filler (for example calcium carbonate, stearate coated calcium carbonate, talc etc). Together with additives for example antioxidants, pigments and wetting agents etc. A general mixing process for the production of a typical product of the present invention, here a butyl sealant, is given below.
Turn on the steam to the mixer jacket.
Add all of the butyl rubber, ands 1/4 of the process oil.
and 1/4 of the inorganic filler. Mix until blended together.
Add all of the antioxidant.
Add 1/4 of the inorganic filler. Mix until rubber dispersed (approx 20 minutes). Turn steam off.
Add all pigment and mix for 5 mins.
Add 1/8 of the inorganic filler and 1/8 of the process oil mix until dispersed (approx 5 minutes).
Add 1/8 of the inorganic filler and 1/8 of the process oil mix until dispersed (approx 5 minutes).
Add 1/8 of the inorganic filler and 1/8 of the process oil mix until dispersed (approx 5 minutes).
Add 1/8 of the inorganic filler and 1 /8 of the process oil mix until dispersed (approx 5 minutes).
Slowly add remaining 1/4 of the process oil and mix until dispersed (approx 5 minutes).
Add 3mm diameter polyester beads and mix until dispersed (approx 5 minutes).

The mixing process is followed by an Extrusion Process to provide the sealant in a conveniently useable form. After sealant has cooled to room temperature load product as required into a single or twin screw extruder. The butyl strip is then forced through a die onto release paper and rolled into the required length in order to give product of the specified cross-section for example 5 mm diameter, or rectangular (parallelepiped) 25 x 4 mm, 18 x 4.5 mm or 10 x 3 mm. The extrusion speed is approximately 2 metres / minute and the extrusion temperature is typically between 50 and 70°C.

Use of a bead concentration of between 100 and 500 beads per 100 x 100 mm of sealant strip has been shown to give acceptable extrusion without blocking the extrusion head whilst providing good offsetting performance in the sense of providing adequate points of contact to give a lap joint, particularly one of width from 5 mm to 2 cm, consistent thickness.

A further advantage of the present invention is that no damage is caused to the mixing / extrusion equipment if deformable beads are used whereas incompressible hard beads would cause excessive wear to the manufacturing equipment. In addition the deformable spacer beads must be resilient in order that they are not damaged during the mixing / cxtrusion process. This has been found to be the case even were the hardness of the incompressible particles is lower than the hardness of the material comprising the manufacturing equipment.

Non-setting mastic or sealant materials for use in the present invention may be based on ethylene propylene diene, natural rubber, butyl rubber, polyisobutylene rubber, polybutene and polyolefin polymers, in addition to those stated above. These polymers are preferably in the form of pre-formed solid blocks, crumb or high viscosity liquids which are comminuted and then optionally mixed in combination with process oils, fillers and antioxidants to form a homogeneous plastic mastic.

Setting sealant materials suitable for use in the present invention including but not limited to silyl terminated polyether, polyurethane, silyl terminated polyurethane, acrylic and silicone. These types of curing sealants are extensively used to bond windscreens into a wide range of vehicles at OEMs (Original Equipment Manufacturers). For example, in automotive, truck, bus, coach and railway train construction. In such applications it is essential to maintain a uniform bond line as the fit of the windscreen must be maintained within close tolerances. In the current applications shims or spacers are applied manually and then removed as the sealant is cured. Using the present invention of incorporating spacers into the sealant will improve productivity, by removing that process step.

A further advantage of using deformable offsetting particles of the present invention is that the deformable particles have been found not to damage application equipment nor will they damage the paint, glass or metal substrate, particularly when used with the Young's modulus parameters stated above. The benefits of the present invention are most present with non-setting mastic materials, non-setting mastic materials are preferred for use in the present invention. The use of setting sealants may be excluded from the present invention. This is because the period of utility during which the offsetting particles performs their function may be such that the degree of extrusion possible before setting can reduce the effectiveness of the present invention, particularly at the thicknesses of sealant relevant in typical manual construction.

Fasteners for use in lap joint formed using the method and sealant of the present invention include screws, bolts and rivets, preferred are self tapping screws which are preferably applied to a set compression force, such as by means of a given applied torque on tightening, such as across a lap-joint.

The first and second face of the sealant strip are preferably parallel. This allows for easy placement of the strip and an extended area about which the water tight seal may take place. The sealant strip is preferably rectangular in cross section with a length at least 10 times the width of the strip and a width at least twice the thickness of the strip, more preferably 5 times the thickness of the strip. This enables it to be easily produced by a co-extrusion process and readily applied manually.

The present invention will now be illustrated with reference to the figures in which:
Figure 1 shows a known lap joint secured by a fastener;
Figure 1A shows a known lap joint secured by a fastener illustrating the self-extrusion of sealant from between the joint;
Figure 2 shows a lap joint secured by a fastener in which spherical offsetting particles are used in a sealant composition;
Figure 3 shows a lap joint secured by a fastener in which the fastener has placed the joint under compression and in which spherical offsetting particles are present in a sealant composition;
Figure 4 shows a lap joint in which a non-deformable spherical offsetting particle is secured by means of deformation of the material which is joined;
Figure 5 shows the nature of deformation of a deformable offsetting particle when brought under compression, such as when used in a lap joint as part of a sealant composition of the present invention;
Figure 6 shows a lap joint employing a sealant composition comprising offsetting particles having a size distribution;
Figure 7 shows a lap joint employing a deformable offsetting particle in a sealant composition, such as between panes of glass;
Figures 8 show a lap joint being brought under compression, the diagram illustrating a change in orientation of an isolated ellipsoidal offsetting particle;
Figure 8A shows an isolated ellipsoidal offsetting particle in a random orientation suspended in a sealant composition (not shown);
Figure 8B shows the joint of figure 8A when the materials of the lap joint abut the ellipsoidal offsetting particle;
Figure 8C shows the joint of figure 8B when the materials of the lap joint are brought sufficiently close so as to approximate to the narrowest damage of the ellipsoidal offsetting particle;
Figures 9 and 10 show graphical results of samples of Silyl Modified Polymer based sealant which were prepared on glass panels with various levels and different types of beads as spacers. Duplicate tests were carried out for each sample.
Figure 11 shows graphical results of compressive force (in N) versus distance (mm) for sealant samples in a lap joint made with glass panels.

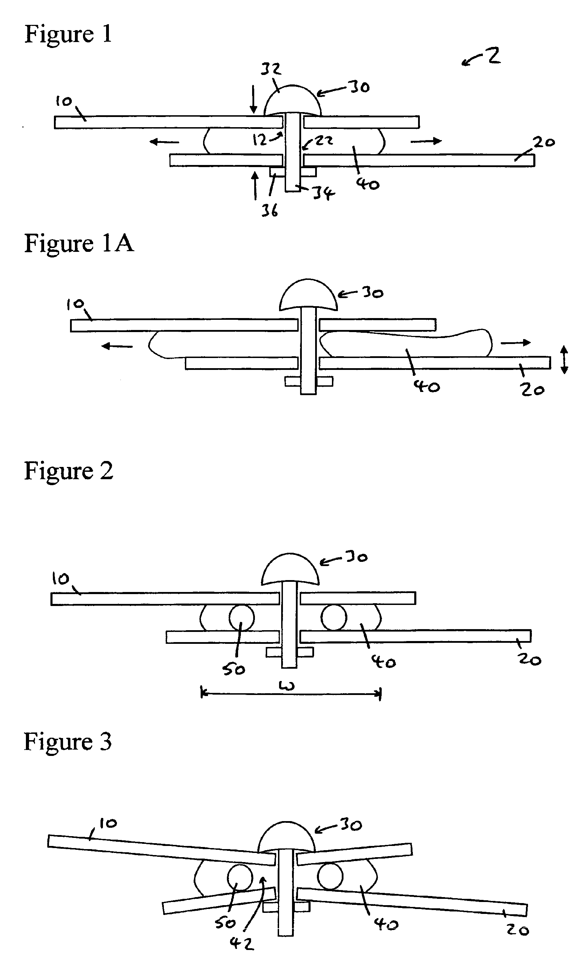

Figures 2, 3, 4, 6, 7, 8, 9, 10 and 11 relate to the present invention.

The figures predominantly show lap joints secured by means of a specif fastener. However, the use of a specific fastener is only a preferred feature of joints using the present invention and is present in the illustrations to facilitate description. Features in drawings incorporating a specific fastener are not necessarily excluded from use when a fastener is not present. Similarly a plurality of fasteners will normally be used along the length of a joint.

Figure 1 shows a known lap joint 2 secured by a fastener 30. The lap joint 2 comprises an upper sheet 10 of material and a lower sheet 20 of material, in this case the two materials being the same. The two sheets overlap to form a lap joint 2, which in this instance is held together by means of a fastener 30. The fastener 30 comprises a head 32 a shaft 34 and a nut 36 engaged on a screw thread of the shaft such that the fastener 30 may be tightened so as to bring together sheets 10 and 20 so as to secure the joint and to stop lateral movement of the joint 2. The fastener 30 will preferably be a self tapping screw or a compression rivet but this is not shown for case of illustration. The lap joint of figure 1 provides a means of securing to sheets of material 10, 20 to form a water tight seal by means of sealant 40.

The known lap joint of figure 1, particularly wherein the sealant 40 is a non-setting sealant, will over time extrude sealant 40, this is shown in figure 1A. The sealant self extrudes from the space between the sheets 10, 20 by the action of mechanical movement of the sheets, temperature changes and creep of the sealant. This eventually leads to a breakdown of the sealant function and a reduction in tension of the fastener 30 such that the joint is no longer effective either mechanically or against water ingress. As illustrated, the sealant 40, exits from the overlap in the sheet material 10, 20 and so is more exposed, since non-setting sealants are intrinsically tacky this gives rise to unwanted adhesion to additional materials, such as dirt. The extrusion of the sealant 40, also means that the water seal between the sheets 10, 20 is often lost and that the thickness of the sealant reduces both leaving the fastener 30 to be loose in the joint, which gives rise to mechanical wear and tear, enlargement of the aperture 12 and a further mechanical degradation of the joint.

Figure 2 shows a lap joint secured by a fastener 30 in which spherical offsetting particles 50 are used in a sealant composition. The features of figure 2 are as described in figure 1. The offsetting particles serve to limit the approach of the sheets 10, 20 when tension is applied by a fastener 30 to secure the joint. Therefore, at least initially the sealant 40 is not expelled from the lap joint.

The known lap joint of figure 2, when the diameter of the offsetting particles 50 is in the order of less than 10 times the width (w) of the joint occupied by the sealant material 40 also gives rise to the self extrusion problem described above.

Figure 3 shows a lap joint secured by a fastener in which the fastener has placed the joint under compression and in which spherical offsetting particles are present in a sealant composition. The self extrusion problem known for the lap joint assembly of figure 2 is easily made worse when the materials joined are flexible, or reformable, and the fastener 30 is applied with too much force. This is a common occurrence as the situation in which a relatively large sealant gap to sealant width is normally used when manual assembly of joints is practised where the performance of the manual operation will normally be inherently variable.

Further, the presence of offsetting particles adjacent to the fastener 30 gives rise to a leverage effect in which the offsetting particles 50 act as a fulcrum in which compression of the sheets 10, 20 to one side of the offsetting particles 50 lever the longer parts of the sheet material 10, 20 open such that the sheets 10, 20 are set at an angle and are no longer parallel. This not only has the effect of excluding the sealant 40 but also, when spherical non-compressible particles 50 are used those particles roll out of the joint such that the spacer behind the particles 42 is not readily filled by the sealant 40 such that a gap in the sealant occurs where water may leak in through the apertures (not numbered) in the sheets 10, 20 through which the fastener extends and the integrity of the joint is lost. It is noted that when a piece of wire is used in place of the particles 50 (as described above for the prior art) the effect is even worse as there is virtually no possibility that sealant can backfill into region 42 when the wire is pushed out of the joint. For completeness it is noted that in practical circumstances with large sheets of material 10, 20 the distortion shown in figure 3 is localised, such as in the form of a dimple or round depression in the sheet material rather than an angling of the material as a whole, the effect however being the same as described above.

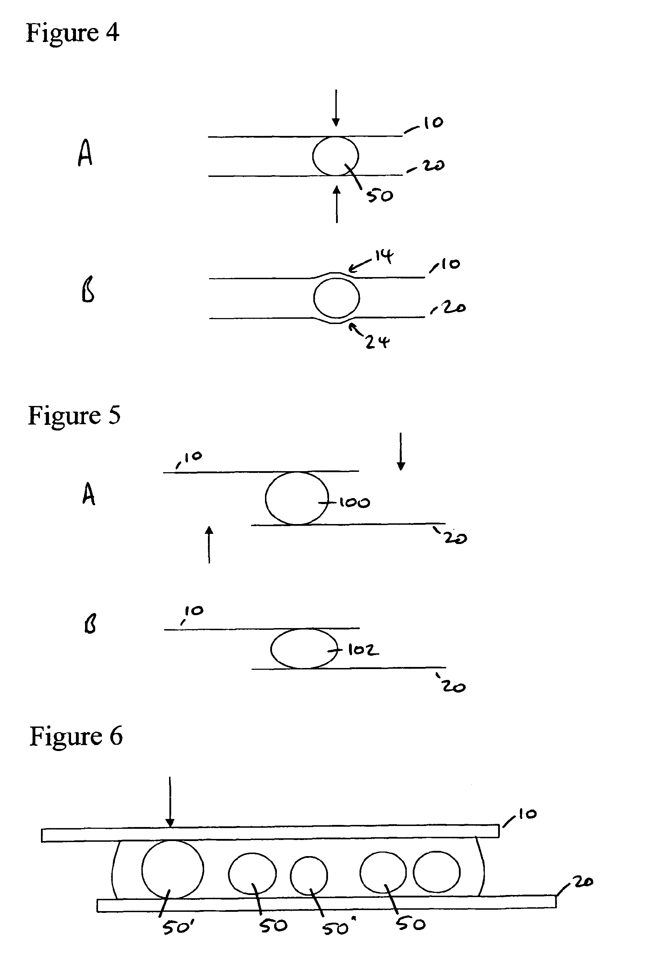

Figure 4 shows a lap joint in which a non-deformable spherical offsetting particle 50 is secured by means of deformation of the material 10 and/or 20 to which is joined. In many applications where small offsetting particles are used the size of the non-deformable offsetting particle compared to the thickness of the sheets of material and the rigidity ofthat material, particularly were sheet steel is used is such that the leverage effect does not occur, to any great extent where the offsetting particles are of size below 1 mm and the joint width, which is held cohesively together by means of the sealant 40 (such as by suction, capillary action or adhesion), is 10 times or more the size of the offsetting particle. This is thought to be because of the possibility of the rigid offsetting particles indenting the sheet material as shown were in figure 4A force applied to the sheets 10, 20 results in deformations 14, 24 in the sheets 10, 20 respectively as shown in figure 4B.

Figure 5 shows a deformable offsetting particle according to aspects of the present invention. When a deformable offsetting particle is used, a deformable offsetting particle preferably being an offsetting particle that has a Young's modulus of between 0.1 and 10 GPa. When the sheets of material 10, 20 forming the lap joint approach and exert a compressive force on a deformable offsetting particle 100 the particle deforms to an ovoid or more ovoid shape 102 and because the Young's modulus of the particle is lower than the Young's modulus of the sheet material the particle deforms in preference to the sheet material thus maintaining the integrity of any coating on the sheet material and initiating and/or propagating any cracks in the sheet material.

Figure 6 shows a lap joint employing a sealant strip comprising offsetting particles 50 having a size distribution. When using non-a deformable offsetting particles it is not particularly necessary to use a narrow particle size distribution as the material which is being connected by the lap joint can deform to accommodate differences in particle size. However, as shown in figure 6 the presence of a large particle 50' in the presence of more numerous small particles 50 gives rise to a 1st point of contact between the sheets of material 10, 20 and a particle and a stress point is built up. This makes it impractical to use non-compressible offsetting particles when one or both of the sheets is a brittle material, such as glass.

Figure 7 shows a lap joint employing a deformable offsetting particle 100 in a sealant composition, such as between panes of glass 10A. When sheets or material 10A, 20 arc brought together in a lap joint under compression and a deformable offsetting particle of the present invention is employed 100 any particularly large particles will deform to an ovoid or more ovoid shape. Whilst this creates a localised point of pressure on the sheet material 10A the presence of adjacent particles 100 serves to reduce the localised pressure and the inherent plasticity of low Young's modulus materials means that over time particle 102 will cease to provide any significant localised point of pressure. Therefore the deformable offsetting particles of the present invention are particularly suitable for use when forming a joint between fragile materials or between a fragile and a non-fragile material, situations prevalent where sheets of glass are used.

Figures 8 show a lap joint being brought under compression, the diagram illustrating a change in orientation of an isolated ellipsoidal offsetting particle. As a lap joint between sheet materials 10, 20 is formed by bringing the sheet materials 10, 20 together and in the ellipsoidal offsetting particle suspended in sealant (not shown for clarity) changes its orientation as shown in the sequence A, B, C of figure 8. This is particularly significant in the context of a joint formed by the application of a tightenable fastener were by tightening the fastener the sheets of material 10, 20 are brought together to form a joint.

Figure 8A shows an isolated ellipsoidal offsetting particle in a random orientation suspended in a sealant composition (not shown). On bringing sheet materials 10, 20 together the sheets approach the particle 104.

Figure 8B shows the joint of figure 8A when the materials of the lap joint abut the ellipsoidal offsetting particle. When, as described above the sheet materials 10, 20 approach the particle 104 they will eventually come into contact with the particle and the particle will provide a degree of resistance to further approach of the sheets together.

Figure 8C shows the joint of figure 8B when the materials of the lap joint are brought sufficiently close so as to approximate to the narrowest damage of the ellipsoidal offsetting particle. On progressive approach of the sheet materials 10, 20 the particle 104 rotates until further rotation will not serve to dissipate the energy of approach and at this point the, preferred, deformability of the of the particle comes in to play.

### Experimental

### Experiment 1

Manufacturing equipment: Bulk material is produced on a Z-blade (or sigma blade) mixer of the type manufactured by Kupper, fitted with a screw to aid the mixing process and facilitate emptying from the mixer and fitted with a heated jacket (either steam heated or oil heated) is required to aid dispersion of the high molecular weight rubber (for example butyl rubber, polyisobutylene, ethylene propylene, poyolefin etc) together with inorganic mineral filler (for example calcium carbonate, stearate coated calcium carbonate, Talc etc). Together with additives for example antioxidants, pigments and wetting agents etc. A general mixing process for the production of a typical butyl sealant is given below. Batch size approx 500 kg Turn on the steam to the mixer jacket.
Add 50 kg of butyl rubber, 20 kg of the process oil
and 75 kg of the inorganic filler. Mix until banded together.
Add all of the antioxidant
Add 75 kg of the inorganic filler. Mix until rubber dispersed (approx 20 minutes). Turn steam off.
Add all pigment and mix for 5 minutes.
Add 50 kg of the inorganic filler and 15 kg of the process oil mix until dispersed (for 5 minutes).
Add 50 kg of the inorganic filler and 15 kg of the process oil mix until dispersed (for 5 minutes).
Add 50 kg of the inorganic filler and 15 kg of the process oil mix until dispersed (for 5 minutes).
Add 50 kg of the inorganic filler and 15 kg of the process oil mix until dispersed (for 5 minutes).
Slowly add remaining 15 kg of the process oil and mix until dispersed (for 5 minutes).

The subsequent compositions are based upon the above base sealant composition to which various offsetting particles were added.

In production of a final product according to the invention, when batch of the above process has passed the Quality Control tests the polymeric beads are all added (50kg) and mixed for 5 minutes, at which time the particles are uniformly distributed in the above base sealant. In the experimental work below the beads were added in the laboratory to the composition as otherwise prepared above.

The final stage is to empty from mixer through screw extrusion and stack on pallet each row separated by release paper or make into spiral rolls of sealant on release paper, such as a silicone or wax coated paper.

### Experiment 2

Two particle types were compared, a hard glass spherical particle and polymeric ellipsoidal particles. The characteristics of the particles are as follows;

The dimensions of ellipsoidal polyester beads (tradename Estergran (TM) 1411, manufactured by Bostik Ltd) and two different sizes of glass beads (average diameter 1.44 mm trade name Starlite (TM) and average diameter 2.45 mm trade name Saluc S.A.) were measured. Both long and short axis of the polyester beads were measured. In the case of the spherical glass beads only the diameter was measured.
All measurements were made using a Mitutoyo Digital vernier calliper accurate to 2 decimal places. A sample size of approximately 125 for each type of beads was used to indicate the size distribution.

The dimensions of the polymeric (polyester) 'ovoid' beads are given below:
Average long axis = 3.60mm.
Average short axis = 2.31mm.
Average ratio of long axis: short axis = 1.57

Standard deviation long axis = 0.18
Standard deviation short axis = 0.18
Standard deviation of ratio of long axis: short axis = 0.12

Long axis Maximum = 3.95mm
Long axis Minimum = 2.55mm
Short axis Maximum = 2.78mm
Short axis Minimum = 1.32mm
Ratio of long axis to short axis (measure of roundness)
Maximum = 1.93
Minimum = 1.25
Average weight ≈ 0.015g
Average volume ≈ 0.012ml (by calculation volume = mass / density
Density ≈ 1.24

Information regarding approximately 1.5 mm diameter glass beads trade name Starlite (TM) are given below:
Note: the measurements for the diameter were taken from whole beads any part or
damaged beads were discarded.
Average diameter = 1.44mm
Maximum diameter = 1.98mm
Minimum diameter = 1.13mm
Standard deviation of diameter = 0.12
Average weight ≈ 0.0046g
Average volume ≈ 0.002ml (by calculation)
Density ≈ 2.3

Information regarding approximately 2.5mm diameter glass beads from Saluc S.A. are given below Note: the measurements for the diameter were taken from whole beads any part or damaged beads were discarded.
Average diameter = 2.45mm
Maximum Diameter = 2.48mm
Minimum Diameter = 2.43mm
Standard deviation = 0.01
Average weight ≈ 0.02g
Average volume ≈ 0.008ml (by calculation)
Density ≈ 2.5
Startite (TM) (glass beads) is given below.

**Table 1 Number of Polymeric (Estergran (TM)) Beads / 100 x 100 mm of Sealant**

| In 70-03 | | | In Prestik (TM) 6000 | | |
|---|---|---|---|---|---|
| Weight (%) | Volume (%) | Number per 100x100mm | Weight (%) | Volume (%) | Number per 100x100mm |
| 2.5 | 2.9 | 55.8 | 2.5 | 3.2 | 61.6 |
| 5.0 | 5.8 | 111.7 | 5.0 | 6.4 | 123.2 |
| 7.5 | 8.7 | 167.5 | 7.5 | 9.5 | 182.3 |
| 10 | 11.5 | 221.4 | 10 | 12.5 | 241.4 |
| 15 | 17.1 | 329.2 | 15 | 18.5 | 357.1 |
| 20 | 22.6 | 435.1 | 20 | 24.4 | 469.5 |
| 30 | 33.4 | 643.0 | 30 | 35.6 | 685.9 |

**Table 2 Number of Glass Beads / 100 x 100 mm of Sealant**

| In 70-03 | | | In Prestik (TM) 6000 | | |
|---|---|---|---|---|---|
| Weight (%) | Volume (%) | Number per 100x100mm | Weight (%) | Volume (%) | Number per 100x100mm |
| 2.5 | 1.6 | 115.2 | 2.5 | 1.8 | 129.6 |
| 5.0 | 3.2 | 230.4 | 5.0 | 3.5 | 252.0 |
| 7.5 | 4.9 | 352.8 | 7.5 | 5.3 | 381.6 |
| 10 | 6.5 | 468.0 | 10 | 7.2 | 518.4 |
| 15 | 10.0 | 720.0 | 15 | 10.9 | 784.8 |
| 20 | 13.6 | 979.2 | 20 | 14.8 | 1065.6 |
| 30 | 21.3 | 1533.6 | 30 | 23.0 | 1656.0 |

**Table 3 Number of Glass (Saluc) Beads / 100 x 100 mm of Sealant**

| In 70-03 | | | In Prestik (TM) 6000 | | |
|---|---|---|---|---|---|
| Weight (%) | Volume (%) | Number per 100x100mm | Weight (%) | Volume (%) | Number per 100x100mm |
| 2.5 | 1.5 | 45.9 | 2.5 | 1.6 | 49.0 |
| 5.0 | 3.0 | 91.9 | 5.0 | 3.3 | 101.1 |
| 7.5 | 4.5 | 137.8 | 7.5 | 4.9 | 150.1 |
| 10 | 6.1 | 186.8 | 10 | 6.6 | 202.1 |
| 15 | 9.3 | 284.8 | 15 | 10.1 | 309.3 |
| 20 | 12.7 | 388.9 | 20 | 13.8 | 422.6 |
| 30 | 19.9 | 609.4 | 30 | 21.5 | 659.1 |

### Experiment 3

The Effect of Incorporating Various Quantities of Spacer Beads on the Modulus and Bondline Thickness of the Sealant Tested Lap Shear Strength Test on Butyl Sealant

Substrates: Plastic panels approx 100 x 25 x 3.4 mm. Hole drilled in centre to accommodate bolt. Bolt and nut used to apply pressure to centre of bond (this was to reproduce what happens in practice). Note: The nuts and bolts were removed before pulling bonds apart.

Products tested: Butyl sealant Prestik (TM) 6000

Bonded area approximately 30 x 25 mm for Prestik (TM) 6000.
The bondline thickness was maintained either by 2 mm PTFE spacers at the edges of the bond (as a control without spacers in sealant) or the spacer beads incorporated into the sealant at various levels. All bonds pulled apart at 25 nm / minute at laboratory ambient (20 - 26°C, representative for all experimental conditions herein unless specified otherwise).

**Table 4 Adhesion Results for Prestik (TM) 6000 with Various Levels of Polymeric Beads**

| Level of Beads | | Approximate No of beads per 100 x 100 mm | Results for Presik 6000 | |
|---|---|---|---|---|
| By weight % | By Volume % | | Shear Strength (MPa) | Thickness of joint (mm) |
| 0 | 0 | 0 | 0.011 | 2.0mm (PTFE spacer) |
| 2.4 | 2.9 | 56.1 | 0.011 | 1.33 |
| 4.8 | 5.7 | 109 | 0.013 | 1.96 |
| 9.1 | 10.8 | 207.8 | 0.014 | 2.04 |
| 13.0 | 15.3 | 295.0 | 0.016 | 2.12 |
| 16.7 | 19.5 | 375.1 | 0.018 | 2.32 |
| 23.1 | 26.6 | 511.6 | 0.029 | 2.32 |
| 28.6 | 32.6 | 627.8 | 0.032 | 2.32 |
| 33.3 | 37.7 | 725.6 | 0.033 | 2.26 |
| 37.5 | 42.1 | 809.7 | 0.034 | 2.37 |

It may be seen from the results in Table 4 that the shear strength does not drop with the addition up to quite high levels of the polymeric beads to Prestik (TM) 6000.
In fact there appears to be an increase in value as the level of beads is increased. It should be noted that these failure values are very low and therefore a small increase in failure strength appears to be a significant increase as a percentage.
The most important result is that when the level of polymeric beads is between 4.8 % and 13 % by weight the bond line is fairly constant between 1.96 and 2.12 mm.

### Experiment 4

### Lap Shear Strength Tests on ISR 70-03 SSKF

Substrates: Unpainted aluminium 25 x 100 x 1.11 1 mm
Aluminium bonded to aluminium
Bonded area approximately 20 x 25 mm for ISR 70-03 SSKF.
Product tested: Silylated Modified Polymer ISR 70-03 SSKF

The bondline thickness was maintained either by 2 mm PTFE spacers at the edges of the bond (control without spacers in sealant) or the polymeric spacer beads incorporated into the sealant at various levels.
The ISR 70-03 SSKF was left to cure for 14 days at laboratory ambient prior to testing.
All bonds pulled apart at 25 mm / minute at laboratory ambient (20 - 26°C).

**Table 5 Adhesion Results for ISR 70-03 SSKF with Various Levels of Polymeric Beads**

| Level of Beads (Estergran (TM)) | | Approximate No of beads per 100 x 100 mm | Results for ISR 70-03 SSKF | |
|---|---|---|---|---|
| By weight % | By Volume % | | Shear Strength (MPa) | Thickness of joint (mm) |
| 0 | 0 | 0 | 1.93 | 2.0mm (PTFE spacer) |
| 2.4 | 2.8 | 53.9 | 1.88 | 2.36 |
| 4.8 | 5.6 | 107.8 | 1.88 | 1.91 |
| 6.5 | 7.5 | 144.4 | 1.81 | 2.16 |
| 9.1 | 10.5 | 202.1 | 1.81 | 2.16 |
| 13.0 | 14.9 | 286.8 | 1.55 | 2.24 |
| 16.7 | 19.0 | 365.8 | 1.49 | 2.30 |

From Table 5 above the ISR 70-03 SSKF material gives quite a consistent bond line thickness of between 4.8 % and 13 % by weight of polymeric beads (1.91 to 2.24 mm thick bond). The shear strength failure value is consistent between 4.8 % and 9.1% by weight but there is a drop in strength at 13% by weight. This is probably due to the beads having a dilution effect on the sealant.

Substrates: Unpainted aluminium 25 x 100 x 1.11 mm, Aluminium bonded to aluminium. Bonded area approximately 20 x 25 mm for ISR 70-03 SSKF.
Product tested: Silylated Modified Polymer ISR 70-03 SSKF
The bondline thickness was maintained by glass spacer beads incorporated into the sealant at various levels.
The ISR 70-03 SSKF was left to cure for 14 days at laboratory ambient prior to testing. Wall bonds pulled apart at 25 mm / minute at laboratory ambient (20 - 26°C).

Table 6 Adhesion Results for ISR 70-03 SSKF with Various Levels of Starlite (TM) Glass Beads

| Level of Glass Beads (1.4mm) | | Approximate No of beads per 100 x 100 mm | Results for ISR 70-03 SSKF | |
|---|---|---|---|---|
| By weight % | By Volume % | | Shear Strength (MPa) | Thickness of joint (mm) |
| 0 | 0 | 0 | 1.58 | 1.50 (metal bar spacer) |
| 1.0 | 0.6 | 43.2 | 1.77 | 1.44 |
| 1.5 | 1.0 | 72 | 1.81 | 1.48 |
| 2.4 | 1.5 | 108 | 1.82 | 1.51 |
| 4.8 | 3.1 | 223.2 | 1.90 | 1.48 |
| 6.5 | 4.2 | 302.4 | 1.95 | 1.41 |
| 9.1 | 5.9 | 424.8 | 1.80 | 1.66 |
| 13.0 | 8.6 | 619.2 | 1.77 | 1.45 |
| 16.7 | 11.2 | 806.4 | 1.71 | 1.50 |

From Table 6 above the bond line thickness is quite consistent from an addition level of 2.4% by weight. This indicates that a minimum of 100 beads per 100 x 100 mm may be required in order to give uniform thickness. This needs to be confirmed by looking at lower than 2.4% by weight glass beads of approx 1.5 mm diameter (fewer than 100 beads / 100 x 100 mm).
It appears that the shear strength starts to drop in value at above 9.1 % by weight glass beads.
Comparison of Shear Strength Results for ISR 70-03 SSKF Sealant with Various Amounts and Different Types of Spacer Beads Added
Sealant Tested: ISR 70-03 SSKF
Substrates: aluminium to aluminium
Bond area: Approximately 20 x 25 mm
Types of Spacer: Estergran (TM) polymeric beads and Saluc Glass beads
All bonds pulled apart at 25 mm / minute at laboratory ambient (20 - 26°C)
The results (in duplicate) obtained are given in Table 7 below

**Table 7**

| Estergran (TM) Spacers | | | Saluc (TM) Glass Bead Spacers | | |
|---|---|---|---|---|---|
| Spacer % (wt) | Average Bond line Thickness (mm) | Strength (MPa) | Spacer % (wt) | Average Bond line Thickness (mm) | Strength (MPa) |
| 1 | 1.99 | 1.58 | 1 | 2.46 | 1.46 |
| 1 | 2.35 | 1.51 | 1 | 1.59 | 1.49 |
| | | | | | |
| 2.5 | 2.04 | 1.54 | 2.5 | 2.47 | 1.61 |
| 2.5 | 2.28 | 1.62 | 2.5 | 2.41 | 1.59 |
| | | | | | |
| 5 | 2.37 | 1.49 | 5 | 2.46 | 1.57 |
| 5 | 2.33 | 1.58 | 5 | 2.47 | 1.54 |
| | | | | | |
| 10 | 2.39 | 1.43 | 10 | 2.46 | 1.55 |
| 10 | 2.47 | 1.29 | 10 | 2.49 | 1.41 |
| | | | | | |
| 30 | 2.54 | 0.74 | 30 | 2.48 | 1.22 |
| 30 | 2.53 | 0.76 | 30 | 2.49 | 1.26 |

### Experiment 5

### Comparing the Abrasive Nature of Different Types of Bead

### Abrasive Test - Test Method

1. Substrates to be tested were cut into pieces and measured.
2. Test pieces were cleaned with a non-abrasive cloth and solvent.
3. Surfaces of the test pieces were checked and a note was made of any existing scratches, abrasions or other marks.
4. A sealant with a level of spacers equivalent to 100 per 100x100mm was used
5. 5.0g of sealant with spacers, for every 3 square inches of substrate was placed in the centre of one of the test pieces.
6. Another test piece of the same material was placed on top of the sealant gently, but so that the two substrates would line up.
7. Enough of the above assemblies were made; so that at the correct set pressure, the force actually exerted upon the test pieces in the press was equivalent to 19psi. All assemblies were of the same substrate, with the same sealant and spacers between.
8. Test assemblies were placed into the press.
9. The pressure was held for 30 seconds.
10. Assemblies were removed from the press.
11. The top test piece was removed vertically.
12. Excess sealant was carefully removed so as not to rub any spacers against the test piece, a soft spatula e.g. a wooden tongue depressor, was used to do this.
13. The remaining sealant was cleaned off with a non abrasive cloth and solvent.
14. The surfaces of the substrates were examined for any marks, scratches or abrasions that weren't there before.
15. Any marks found were compared between the bottom test piece and the top test piece, to see if they mirrored each other - any mark made to the bottom test piece would also be made in the upper test piece.
16. Any marks not mirrored across both surfaces and those that were already present were discarded and a note was made if any other marks remained.
17. The results are given in Table 8 below.

**Table 8**

| | Polymer beads (Estergran (TM)) | Glass beads 1.4mm | Glass beads 2.5mm |
|---|---|---|---|
| Aluminium | No marks | Marks on surface | Marks on surface |
| Painted Aluminium | No marks | Marks on surface | Marks on surface |
| Galvanised Steel | No marks | Marks on surface | Marks on surface |
| Cold rolled Steel | No marks | Marks on surface | Marks on surface |
| Glass | No marks | No marks | No Marks |

### Experiment 6

Comparing the Hardness of the Polyester (Estergran (TM) 1411) with the Hardness of the Butyl Sealant (Prestik (TM) 6000)

Two types of hardness test were used both are industry standard pieces of equipment. All tests carried out at 20 -26°C
(1) Needle penetration test - where a needle of fixed dimensions attached to an assembly of known weight (in this case 100g) is lowered so that it is just in contact with the surface of the material to be tested. The machine is turned on and the needle drops for a fixed period of time (5 seconds in this case). After this period of time the amount the needle has penetrated is measured in 1/10 mm using a graduated gauge fixed to the Penetrometer.
(2) Shore A Meter - this is a spring operated gauge that is used to measure the hardness of materials.
   The results obtained are given in Table 9 below.

**Table 9 Hardness Test Results for Estergran (TM) 1411 and Prestik (TM) 6000**

| Type of Test | Result for Estergran (TM) 1411 | Result for Prestik (TM) 6000 |
|---|---|---|
| 100g Needle Penetration (0.1 mm) | 1,0, 1 (av = 0.66) | 79, 82, 83 (av = 81.3) |
| Shore A | 95,96,98 | 1,1,1 (av = 1) |

It may be seen form the above results in Table 9 that the Estergran (TM) 1411 is significantly harder than the Prestik (TM) 6000.

### Experiment 7

### Table of Compression Distance and Compressive Force at Glass Break for Glass Beads and Polyester Beads

Compression tests were carried out on silyl modified polymer based sealants filled with various levels and different types of spacer beads.
Sandwich construction test assemblies were prepared using aluminium and glass as the substrates and ISR 70-03 (silyl modified polymer based sealant) with various levels and different types of spacer beads.
The object of this work was to establish an advantage of polymeric beads over glass beads when used as spacers in sealants for fragile substrates.
Glass beads 1 and 2 are duplicate tests on sealant containing 2.5% by weight, approximately 100 beads / 100 x 100 mm area of sealant, of glass beads.
Glass beads 3 and 4 are duplicate tests on sealant containing 5% by weight, approximately 200 beads / 100 x 100 mm area of sealant, of glass beads.

Polymer beads 1 and 2 are duplicate tests on sealant containing 5% by weight, approximately 100 beads / 100 x 100 mm area of sealant, of polymeric beads.
Polymer beads 3 and 4 are duplicate tests on sealant containing 10% by weight, approximately 200 beads / 100 x 100 mm area of sealant, of polymeric beads.
The results obtained are given in Table 10 below.

**Table 10**

| | Approx. No of beads per 100 x 100mm | Addition of beads (%) | Compression distance at glass break (mm) | Compressive Force at glass break (N) |
|---|---|---|---|---|
| Glass Beads 1 | 100 | 2.5 | 0.889 | 716 |
| Glass Beads 2 | 100 | 2.5 | 0.960 | 620 |
| Glass Beads 3 | 200 | 5.0 | 0.959 | 508 |
| Glass beads 4 | 200 | 5.0 | 0.885 | 615 |
| Polymer Beads 1 | 100 | 5.0 | 2.238 | 1984 |
| Polymer Beads 2 | 100 | 5.0 | 3.074 | 2467 |
| Polymer Beads 3 | 200 | 10.0 | 3.32 | 2809 |
| Polymer Beads 4 | 200 | 10.0 | 2.164 | 1790 |

### Conclusion

It may be seen from the results in the above table that when glass beads were incorporated into the sealant the glass panel fractured at low compression and low force.
When polymeric beads were incorporated into the sealant the compression distance was further and the forces obtained before glass fracture were higher.

### Experiment 8

### Compression Test Results for Sealant Containing Polyester Beads and Glass Beads

Samples of Silyl Modified Polymer based sealant were prepared with various levels and different types of beads as spacers. Duplicate tests were carried out for each sample.

Glass Beads 1 and 2 had 2.5% by weight glass beads 1.4 mm diameter mixed in by hand.
Polymer Beads I and 2 had 5% by weight of Estergran (TM) polyester beads mixed in by hand.
The 2.5% addition level of glass beads and 5% addition level of Estergran (TM) were used in order to give approximately 100 beads / 100 x 100 mm.

Glass Beads 3 and 4 had 5% by weight glass beads 1.4 mm diameter mixed in by hand.
Polymer Beads 3 and 4 had 10% by weight of Estergran (TM) polyester beads mixed in by hand.
The 5% addition level of glass beads and 10% addition level of Estergran (TM) were used in order to give approximately 200 beads / 100 x 100 mm.

A sandwich construction was prepared using an aluminium panel (75 x 25 mm) and a glass microscope slide (75 x 25 mm).
A layer of sealant was applied to the aluminium approximately 20 mm x 25 mm and the glass slide was placed on top.
The sandwich construction was compressed in a Testometric (TM) M350-10AT Tensiometer. The speed of compression was 1mm / minute.
A graph of compressive force (N) versus distance (mm) was obtained for each sample.

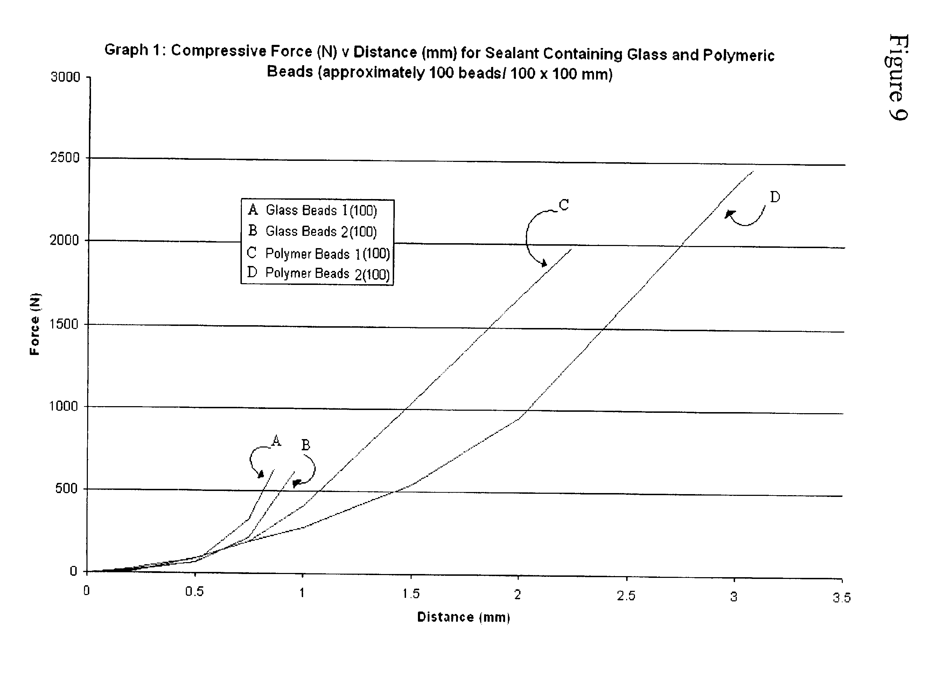

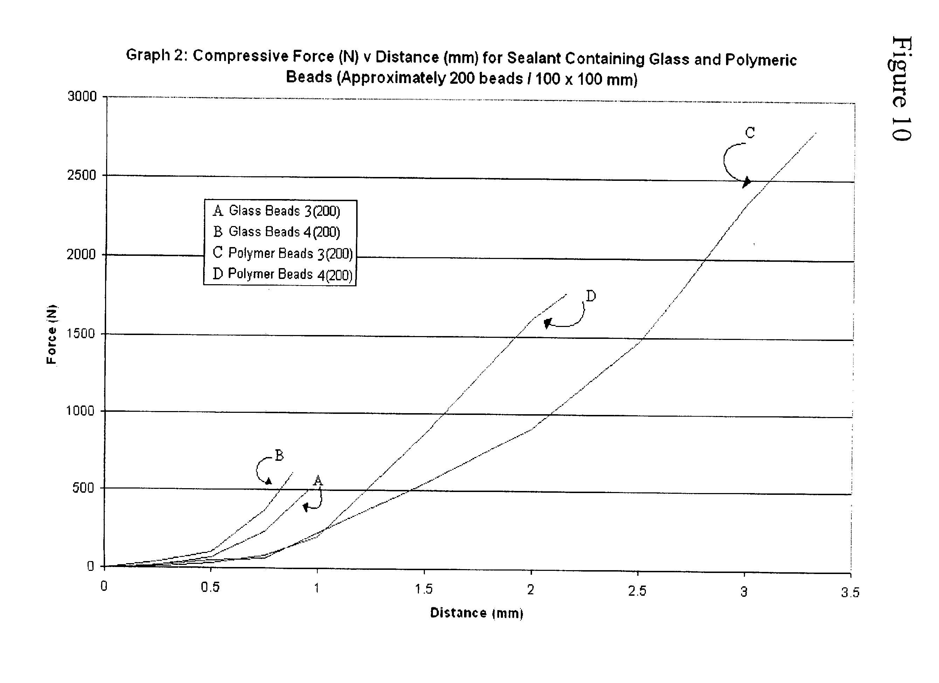

The results obtained are given in Figures 9 and 10.

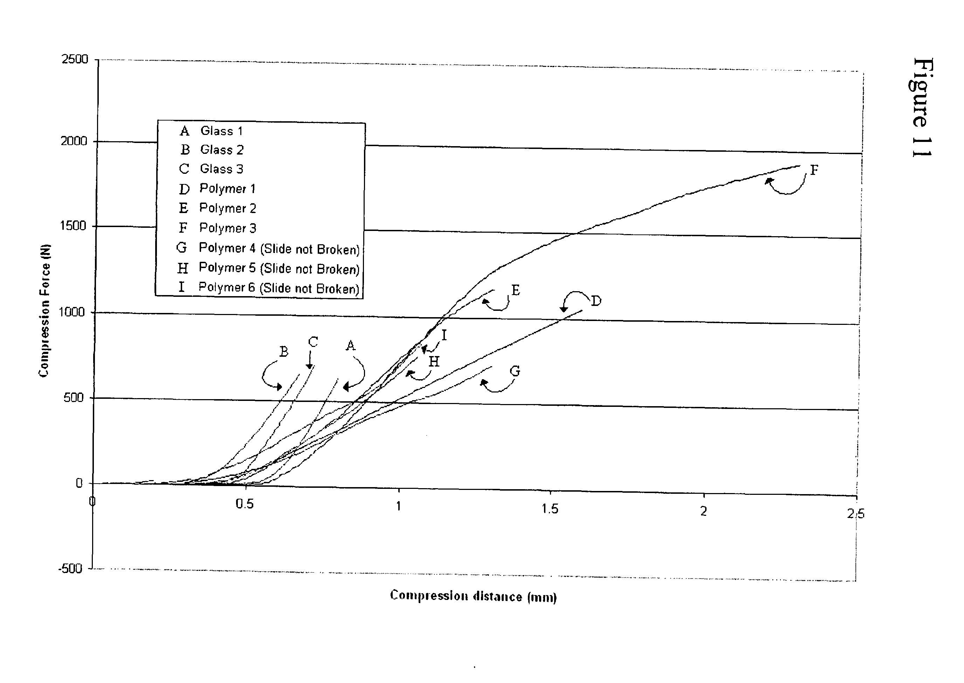

A further set of compression tests were carried out using polymeric beads (Estergran (TM)) and glass beads approximately 2.5 mm in diameter from Saluc.
The same test parameters were used as above with 5% addition level of each type of beads. However, on this occasion in addition to the force at break being recorded for both sets of spacer beads an additional test was carried out. In this instance the test was stopped for the polymeric beads at a force where the glass beads caused fracture to the glass slide. It was noted and recorded that the glass slides were not broken when polymeric beads were used as spacers at these forces.
The results are given in Table 11below and in Figure 11.

**Table 11 Compression Forces for Polymeric Spacers and Glass Spacers (Saluc)**

| | Approx No. of beads per 100x100mm | Addition level of beads (wt%) | Compressive force when stopped/glass broke | Slide broken |
|---|---|---|---|---|
| Glass Beads 1 | 100 | 5 | 639N | Yes |
| Glass Beads 2 | 100 | 5 | 662N | Yes |
| Glass Beads 3 | 100 | 5 | 714N | Yes |
| Polymer Beads 1 | 100 | 5 | 1147N | Yes |
| Polymer Beads 2 | 100 | 5 | 1198N | Yes |
| Polymer Beads 3 | 100 | 5 | 1924N | Yes |
| Polymer Beads 4 | 100 | 5 | 723N | No |
| Polymer Beads 5 | 100 | 5 | 773N | No |
| Polymer Beads 6 | 100 | 5 | 857N | No |

### Experiment 9

### Comparison of Rubber Cord Extruded Through Centre of Sealant with Short Sections of Rubber Cord

### Experimental

(1) Plastic panels approximately 50 x 120 mm were taken and three holes were drilled down the centre at equal distance from one another. The holes were present to facilitate the location of bolts that could subsequently be tightened to form sandwich type assemblies.
(2) A length of butyl sealant (Prestik (TM) 6000) containing a continuous length of rubber cord as a spacer was placed between two plastic panels (described above) such that the final volume of the sealant would not be extruded from the joint if the rubber cord functioned as a spacer.
(3) A section of cord was taken and cut into small sections approximately 3 mm in length and 3 mm in diameter. These particles were mixed in to a sample of Prestik (TM) 6000 such that an approximate level of 8% by weight was incorporated into the butyl sealant. The same experiment was conducted by placing a sample of the sealant containing the small sections of rubber cord between two plastic panels (described in section I above).

Both test assemblies were squeezed together using the bolts and nuts until the panels were fixed in place. The following observations were then noted:
For the sample containing a continuous length of rubber cord there was approximately 8 mm of extruded sealant along approximately 90 mm of one side of the joint and approximately 15 mm of extruded sealant along approximately 90 mm of the opposite side of the joint.
The sample containing the short sections of rubber cord showed only a very small amount (less than 5 mm along 50 mm of the panel) on one side and zero on the opposite side.
This experiment shows that the cut sections of rubber cord act as localised stress distributors that prevent excess sealant from extruding out of the joint.
The continuous length of rubber cord does not prevent the sealant from extruding out of the joint.

### Experiment 10

Table 12 below gives some typical physical properties for a range of polymeric materials that may be considered for use as off-setting particles as well as similar information for incompressible glass particles.

**Table 12 Young's modulus and related data for offsetting beads**

| Test | Estergran (TM) (Polyester) | EVA | Polyethylene | Rubber Cord |
|---|---|---|---|---|
| 100g Needle Penetration (0.1 mm) | 1, 0 (zero) and 1 (average = 0.66) | 3,2 and 1 (average = 2) | 1,1 and 1 (average = 1) | |
| Shore A | 95, 96 and 98 | 79, 80 and 82 | 96, 95 and 95 | 80,80,82 |
| Extension at break (10mm/min) | 250 and 440% | 592 and 644% | 1.6 and 2.7% | 34 and 37% |
| Young's Modulus (MPa) | 491 and 589 (0.49 and 0.589 GPa) | 11 and 9 (0.011 & 0.009 GPa) | 194 and 103 (0.19 and 0.10 GPa) | |

Values for Young's Modulus of various materials from literature:
Young's Modulus for Lead (literature value) = approximately 16 GPa
Young's Modulus for Glass (literature value) = approximately 65 GPa
Young's Modulus for polyester (THERMOSET) (literature value) = approx 3.5 GPa
Young's Modulus for HDPE (literature value) = approximately 0.7 GPa

For the purposes of the present invention compressible is taken as a synonym for deformable as regards the offsetting particles and incompressible is the opposite of deformable.
In the absence of information to the contrary all values and measurements referred to in the present application are as measured or determined at 20°C.

## Claims

1. A sealing strip comprising a continuous sealant composition (40) in the form of continuous sealant phase (40) in which are located resiliently deformable offsetting particles (50) of 1 mm or greater diameter for, in use, defining a minimum thickness of the sealing strip when placed between two surfaces (10, 20) to be sealed.

2. The sealing strip of claim I wherein the Young's modulus of the deformable offsetting particles used in the present invention is between 0.1 GPa and 15 GPa.

3. The sealing strip of claim 2 wherein the deformable offsetting particles are polymer particles.

4. The sealing strip of claim 3 wherein the polymer is selected from one or more of a polyester, and a polyolefin.

5. The sealing strip of any of claims 1 to 4 wherein the offsetting particles (50) are at a concentration of greater or equal to than 100 beads per 10,000 mm² of sealant strip of a given thickness.

6. The sealing strip of claim 5 wherein the offsetting particles (50) are at a concentration of between 100 and 500 beads per 10,000 mm² of sealant strip, the sealant strip being of thickness between 1 mm and 5 mm and the beads being of the diameter between I mm and 3 mm and in any case not greater than the thickness of said strip

7. The sealing strip according to any preceding claim wherein the deformable offsetting particles are non-spherical.

8. The sealing strip according to any preceding claim, when used by in-situ extrusion or when pre-formed, is of a thickness greater than I mm.

9. The sealing strip of any preceding claim wherein the sealing strip is a non-setting sealant strip such that over substantially the whole intended life of the sealant strip the sealant strip has the properties of a liquid.

10. The sealing strip of any of claims 1 to 5 and 7 to 9 wherein the offsetting particles are between 2 and 5mm in diameter

11. The sealing strip of claim 10 wherein the offsetting particles have a particle size distribution with a standard deviation of more than 5% of said particle diameter.

12. A method of forming a water tight joint between two surfaces (10,20), the method comprising placing a sealant strip comprising resiliently deformable offsetting particles (50) of 1 mm or greater on a first surface and placing the second surface on the exposed face of the sealant strip and bringing the surfaces together until contact is made with the deformable offsetting particles (50) and they start to function as spacers between the two surfaces as evidenced by an increase in force required to compress the joint further.

13. The method of claim 12 wherein the deformable offsetting particles have a Young's modulus between 0.1 GPa and 15 GPa.

## Patentansprüche

1. Ein Dichtungsstreifen aufweisend eine kontinuierliche Dichtungsmittelzusammensetzung (40) in Form von einer Dichtungsmittelphase (40), in welcher elastisch deformierbare versetzende Teilchen (50) angebracht sind, die einen Durchmesser von 1 mm oder mehr haben, um im Einsatz eine minimale Stärke des Dichtungsstreifens zu definieren, wenn dieser zwischen zwei Flächen platziert ist, die abgedichtet werden sollen.

2. Der Dichtungsstreifen gemäß Anspruch 1, wobei der Youngsche Modul von den deformierbaren versetzenden Teilchen, die in der vorliegenden Erfindung verwendet werden, zwischen 0,1 GPa und 15 GPa ist.

3. Der Dichtungsstreifen gemäß Anspruch 2, wobei die deformierbaren versetzenden Teilchen Polymerteilchen sind.

4. Der Dichtungsstreifen gemäß Anspruch 3, wobei das Polymer aus einem oder mehreren von einem Polyester und einem Polyolefin ausgewählt wurde.

5. Der Dichtungsstreifen gemäß einem jeden der Ansprüche 1 bis 4, wobei die versetzenden Teilchen (50) in einer Konzentration von 100 Kugeln oder mehr pro 10.000 mm² Dichtungsstreifen von einer gegebenen Stärke vorhanden sind.

6. Der Dichtungsstreifen gemäß Anspruch 5, wobei die versetzenden Teilchen (50) in einer Konzentration zwischen 100 und 500 Kugeln pro 10.000 mm² Dichtungsstreifen, wobei der Dichtungsstreifen eine Stärke zwischen 1 mm und 5 mm aufweist und wobei die Kugeln einen Durchmesser zwischen 1 mm und 3 mm aufweisen, der auf jedem Fall nicht größer als die Stärke der besagten Streifen ist.

7. Der Dichtungsstreifen gemäß einem jeden der vorhergehenden Ansprüche, wobei die deformierbaren versetzenden Teilchen nicht sphärisch sind.

8. Der Dichtungsstreifen gemäß einem jeden der vorhergehenden Ansprüche, der, wenn er von In-Situ-Extrusion verwendet wird oder vorgeformt ist, eine Stärke aufweist, der größer als 1 mm ist.

9. Der Dichtungsstreifen gemäß einem jeden der vorhergehenden Ansprüche, wobei der Dichtungsstreifen ein nicht aushärtender Dichtungsstreifen ist, so dass der Dichtungsstreifen während im Wesentlichen der ganzen beabsichtigen Lebensdauer des Dichtungsstreifens die Eigenschaften einer Flüssigkeit aufweist.

10. Der Dichtungsstreifen gemäß einem jeden der Ansprüche 1 bis 5 und 7 bis 9, wobei die versetzenden Teilchen einen Durchmesser zwischen 2 mm und 5 mm aufweisen.

11. Der Dichtungsstreifen gemäß Anspruch 10, wobei die versetzenden Teilchen eine Teilchengrößeverteilung mit einer Standardabweichung von mehr als 5 % von dem besagten Teilchendurchmesser.

12. Ein Verfahren zum Bilden einer wasserdichten Verbindung zwischen zwei Oberflächen (10, 20), das Verfahren aufweisend ein Anbringen eines Dichtungsstreifens, der elastisch deformierbare versetzende Teilchen (50) von 1 mm oder mehr aufweist, auf einer ersten Oberfläche (10) und ein Anbringen der zweiten Oberfläche auf der freilegenden Seite des Dichtungsstreifens und ein Zusammenbringen der Oberflächen bis Kontakt mit den deformierbaren versetzenden Teilchen (50) erreicht wird und diese damit anfangen, als Abstandsstücke zwischen den zwei Oberflächen zu funktionieren, wie es von einem Anstieg in der Kraft, die zum weiteren Zusammenpressen der Verbindung benötigt wird, dokumentiert wird.

13. Das Verfahren gemäß Anspruch 12, wobei die deformierbaren versetzenden Teilchen einen Youngschen Modul aufweisen, der zwischen 0,1 GPa und 15 GPa ist.

## Revendications

1. Bande d'étanchéité renfermant une composition d'étanchéité continue (40) sous forme d'une phase d'étanchéité continue (40), à laquelle sont incorporées des particules de compensation élastiquement déformables (50) d'un diamètre de 1 mm ou plus pour définir, en utilisation, une épaisseur minimum de la bande d'étanchéité, une fois que celle-ci est placée entre deux surfaces (10, 20) à assembler en étanchéité.

2. Bande d'étanchéité suivant la revendication 1, dans laquelle le module de Young des particules de compensation déformables utilisées dans la présente invention est compris entre 0,1 GPa et 15 GPa.

3. Bande d'étanchéité suivant la revendication 2, dans laquelle les particules de compensation sont des particules en polymère.

4. Bande d'étanchéité suivant la revendication 3, dans laquelle le polymère est choisi parmi un ou plusieurs polyesters et polyoléfines.

5. Bande d'étanchéité suivant une quelconque des revendications 1 à 4, dans laquelle les particules de compensation (50) sont en concentration supérieure ou égale à 100 billes par 10000 mm² de bande d'étanchéité d'une épaisseur donnée.

6. Bande d'étanchéité suivant la revendication 5, dans laquelle les particules de compensation (50) sont en concentration comprise entre 100 et 500 billes par 10000 mm² de bande d'étanchéité, la bande d'étanchéité présentant une épaisseur entre 1 mm et 5 mm et les billes un diamètre entre 1 mm et 3 mm qui ne dépasse en aucun cas l'épaisseur de ladite bande.

7. Bande d'étanchéité suivant une quelconque des revendications précédentes, dans laquelle les particules de compensation déformables sont non sphériques.

8. Bande d'étanchéité suivant une quelconque des revendications précédentes qui est d'une épaisseur supérieure à 1 mm lorsqu'elle est utilisée dans le cadre d'une extrusion in situ ou lorsqu'elle est préformée.

9. Bande d'étanchéité suivant une quelconque des revendications précédentes, la bande d'étanchéité étant une bande étanche non durcissante, de sorte qu'elle présente les propriétés d'un liquide essentiellement pendant toute sa durée de vie prévue.

10. Bande d'étanchéité suivant une quelconque des revendications précédentes 1 à 5 et 7 à 9, dans laquelle les particules de compensation présentent un diamètre entre 2 et 5 mm.

11. Bande d'étanchéité suivant la revendication 10, dans laquelle les particules de compensation présentent une distribution de taille de particule avec un écart standard de plus de 5% dudit diamètre de particule.

12. Procédé de formation d'un joint étanche à l'eau entre deux surfaces (10, 20), le procédé comprenant le placement d'une bande d'étanchéité renfermant des particules de compensation déformables élastiquement (50) de 1 mm ou plus sur une première surface et le placement de la seconde surface sur la face exposée de la bande d'étanchéité et en rapprochant les surfaces l'une de l'autre, jusqu'à ce qu'un contact est établi avec les particules de compensation déformables (50) et que celles-ci commencent à fonctionner comme écarteurs entre les deux surfaces, ce qui est mis en évidence par une augmentation de la force nécessaire pour comprimer davantage le joint.

13. Procédé suivant la revendication 12, dans lequel les particules de compensation déformables présentent un module de Young compris entre 0,1 GPa et 15 GPa.
